# EUROPEAN PATENT APPLICATION

(11) **EP 3 336 833 A1**
(43) Date of publication of application: **20.06.2018**
(21) Application number: 16834927.2
(22) Date of filing: 19.07.2016
(51) Int. Cl.: G09G 5/397, G06F 3/14, G06T 15/00, G09G 5/00, G09G 5/02, G09G 5/10, G09G 5/36, G09G 5/391, G09G 5/393, G09G 5/399, H04N 9/64

(54) **INFORMATION PROCESSING DEVICE, INFORMATION PROCESSING METHOD, AND PROGRAM**

(30) Priority: 11.08.2015 JP 2015159089
(71) Applicant: Sony Corporation, Tokyo 108-0075 (JP)
(72) Inventor: KOBAYASHI, Yoshiyuki, Tokyo 108-0075 (JP); UCHIMURA, Kouichi, Tokyo 108-0075 (JP)
(74) Representative: Witte, Weller & Partner Patentanwälte mbB
(86) International application number: PCT/JP2016/071112
(87) International publication number: WO 2017/026230

(57) **Abstract**

There provided is a configuration in which a completion of a drawing process by a drawing command executed by an application is detected and a conversion process and a display process are performed on an image to which the drawing process is completed. An application execution unit for executing the drawing process and storing a drawing result in a storage unit, a display image generation unit for converting a drawn image in the storage unit, and a buffer management unit for switching a plurality of buffers in the storage unit are included. The app execution unit calls a drawing completion notification application programming interface (API) after drawing based on the drawing command is completed. The buffer management unit switches the buffers in response to the call of an API. The display image generation unit executes the image conversion on the stored image in the buffer which is not the buffer in which drawing is being executed by the app execution unit.

## Description

### TECHNICAL FIELD

The present disclosure relates to an information processing device, an information processing method, and a program. More specifically, the present disclosure relates to an information processing device, an information processing method, and a program that perform an image drawing process and further executes an image conversion of the drawn image.

### BACKGROUND ART

In these days, as a television and other display devices, a display device that can output a high-resolution image, a wide dynamic range image, or colors in a wider color space has been developed and widely used.

Here, an image in a high resolution, a wide dynamic range, and a wide output color space is referred to as an ultra high definition (UHD) image for example and UHD capable display devices that can display the UHD image have also been spreading.

However, currently, the UHD capable display devices, which are display devices that can display a UHD image and conventional display devices are both exist.

In such a situation, in a case where processes for reading image data from a Blu-ray (registered trademark) disc (BD) for example and displaying the image data on a display unit are executed, the image is needed to be displayed according to each display function of the display devices of both conventional display devices and UHD capable display devices.

In view of the above, firstly, it is needed to provide a configuration that generates a standard dynamic range (SDR) image which can be displayed by a conventional display device for example, executes an image conversion such as a resolution conversion, a dynamic range conversion, and a color space conversion, and displays the image on the UHD capable display device, as needed.

In this case, for example, it is needed to sequentially execute processes in different phases including an image drawing process by an image drawing application, an image conversion process on a drawn image, and an image display process.

In a case where these different processes are executed for example, an incomplete image may be displayed if an image conversion and a display process are started before the completion of one image drawing command.

To display a complete converted image, it is needed to execute the conversion process and display process after a completion of the drawing process, and it is needed to control execution timings of the respective processes with a certain method.

Here, Patent Document 1 (Japanese Patent No. 4962674) discloses a configuration for maintaining a consistency of a left eye image and a right eye, which compose a 3D image, and determining a display timing to display a drawing-completed image.

However, this disclosure discloses only the configuration for controlling process timings to maintain the consistency of the left eye image and the right eye, which compose the 3D image.

### CITATION LIST

### PATENT DOCUMENT

Patent Document 1: Japanese Patent No. 4962674

### SUMMARY OF THE INVENTION

### PROBLEMS TO BE SOLVED BY THE INVENTION

The present disclosure is made in view of the above problem for example, and has an obj ect to provide an information processing device, an information processing method, and a program that are made to execute an image conversion after detecting a completion timing of a drawing process and output a display image in a configuration for executing processes of the image conversions such as a resolution conversion, a dynamic range conversion, and a color space conversion and displaying an image on a display device.

### SOLUTIONS TO PROBLEMS

A first aspect of the present disclosure lies in
an information processing device including:
an application execution unit configured to execute a drawing process and store a drawing result in a storage unit;
a display image generation unit configured to execute an image conversion process on a drawn image in the storage unit and generate a display image to be output to a display unit; and
a buffer management unit configured to execute a switching process of a plurality of buffers set in the storage unit,
in which
the application execution unit executes a call process of a drawing completion notification application programming interface (API) after a completion of a drawing process based on a drawing command,
the buffer management unit executes the buffer switching process for switching the buffers storing the image drawn by the application execution unit, in response to a call of the drawing completion notification API, and
the display image generation unit executes the image conversion process on the image stored in the buffer which is not the buffer in which the drawingprocess by the application execution unit is being executed.

Further, a second aspect of the present disclosure lies in
an information processing method that is executed in an information processing device,
the information processing device including:
an application execution unit configured to execute a drawing process and store a drawing result in a storage unit;
a display image generation unit configured to execute an image conversion process on a drawn image in the storage unit and generate a display image to be output to a display unit; and
a buffer management unit configured to execute a switching process of a plurality of buffers set in the storage unit,
in which
the application execution unit executes a call process of a drawing completion notification application programming interface (API) after a completion of a drawing process based on a drawing command,
the buffer management unit executes the buffer switching process for switching the buffers storing the image drawn by the application execution unit, in response to a call of the drawing completion notification API, and
the display image generation unit executes the image conversion process on the image stored in the buffer which is not the buffer in which the drawingprocess by the application execution unit is being executed.

Further, a third aspect of the present disclosure lies in
a program that causes an information processing device to execute information processing,
the information processing device including:
an application execution unit configured to execute a drawing process and store a drawing result in a storage unit;
a display image generation unit configured to execute an image conversion process on a drawn image in the storage unit and generate a display image to be output to a display unit; and
a buffer management unit configured to execute a switching process of a plurality of buffers set in the storage unit,
in which the program causes
the application execution unit to execute a call process of a drawing completion notification application programming interface (API) after a completion of a drawing process based on a drawing command,
the buffer management unit to execute the buffer switching process for switching the buffers storing the image drawn by the application execution unit, in response to a call of the drawing completion notification API, and
the display image generation unit to execute the image conversion process on the image stored in the buffer which is not the buffer in which the drawingprocess by the application execution unit is being executed.

Here, the program according to the present disclosure is, for example, a program which can be provided via a recording medium and a communication medium that provide, in a computer-readable format, the program to an information processing device or a computer system, which can execute various program codes. By providing such a program in a computer-readable format, a process according to the program can be realized in the information processing device or computer system.

Other objects, characteristics, and advantages of the present disclosure will be made clear in detailed description below based on embodiments and attached drawings of the present disclosure. Here, a system in this specification represents a logical collective configuration of a plurality of devices and the devices of each configuration do not have to be in a same housing.

### EFFECTS OF THE INVENTION

A configuration of an embodiment according to the present disclosure realizes a configuration in which a completion of a drawing process based on a drawing command executed by an application is detected, and a conversion process and a display process are performed on an image to which the drawing process is completed.

More specifically, an application execution unit for executing a drawing process and storing a result of drawing in a storage unit, a display image generation unit for executing a conversion process on a drawn image in the storage unit, and a buffer management unit for switching a plurality of buffers in the storage unit are provided. The application execution unit executes a call of a drawing completion notification application programming interface (API) after the drawing process based on the drawing command is completed. The buffer management unit executes the buffer switching process in response to a call of the drawing completion notification API. The display image generation unit executes the image conversion on the image stored in the buffer which is not the buffer in which the drawing is being executed by the app execution unit.

The above configuration realizes a configuration in which a completion of a drawing process based on a drawing command executed by an application is detected, and a conversion process and a display process are performed on an image to which the drawing process is completed. Here, the effects described in this specification are only examples and should not be limited, and there may be additional effects.

### BRIEF DESCRIPTION OF DRAWINGS

Fig. 1 is a diagram for explaining an outline of a BDMV format.
Fig. 2 is a diagram for explaining a management structure of files in a BD.
Fig. 3 is a diagram illustrating an example of a reproducing process of data read from a recording medium 10.
Fig. 4 is a diagram illustrating an example of a part of a configuration of an information processing device 20, which is a configuration for outputting an image.
Fig. 5 is a diagram for explaining a detailed configuration example of a data processing unit 30 that executes a BD-J application and the like.
Fig. 6 is a diagram for explaining an illustrative example of an image conversion process executed by the data processing unit 30.
Fig. 7 is a diagram for explaining an illustrative example of an image conversion process executed by the data processing unit 30.
Fig. 8 is a diagram for explaining screen tearing.
Fig. 9 is a diagram illustrating a setting example and an execution manner of drawing commands in each image frame.
Fig. 10 is a diagram for explaining a configuration and a process of an information processing device according to an embodiment 1.
Fig. 11 is a diagram illustrating a flowchart for explaining a process executed by the information processing device according to the embodiment 1.
Fig. 12 is a diagram for explaining a configuration and a process of the information processing device according to an embodiment 2.
Fig. 13 is a diagram illustrating a flowchart for explaining a process executed by the information processing device according to the embodiment 2.
Fig. 14 is a diagram illustrating a hardware configuration example of the information processing device.

### MODE FOR CARRYING OUT THE INVENTION

In the following, an information processing device, an information processing method, and a program according to the present disclosure will be described in detail with reference to the drawings. Here, the description will be given in the following order.
1. Example of recorded data in information recording medium and example of reproducing process
2. Example of image output process using BD-J application in information processing device
3. Problem of image output process including image conversion
   3-1. Screen tearing
   3-2. Load of image conversion process
4. Outline of process executed by information processing device according to the present disclosure
5. (Embodiment 1) An embodiment applied with a configuration with the storage unit (graphics plane) configured with double buffering
6. (Embodiment 2) An embodiment applied with a configuration with the storage unit (graphics plane) 40 configured with triple buffering
7. Example of hardware configuration of information processing device
8. Summary of configuration according to present disclosure

### [1. Example of recorded data in information recording medium and example of reproducing process]

Firstly, examples of recorded data in an information recording medium and a reproducing process will be described.

In the following, recorded data in a Blu-ray (registered trademark) disc, as an example of the information recording medium, and an example of a reproducing process will be described.

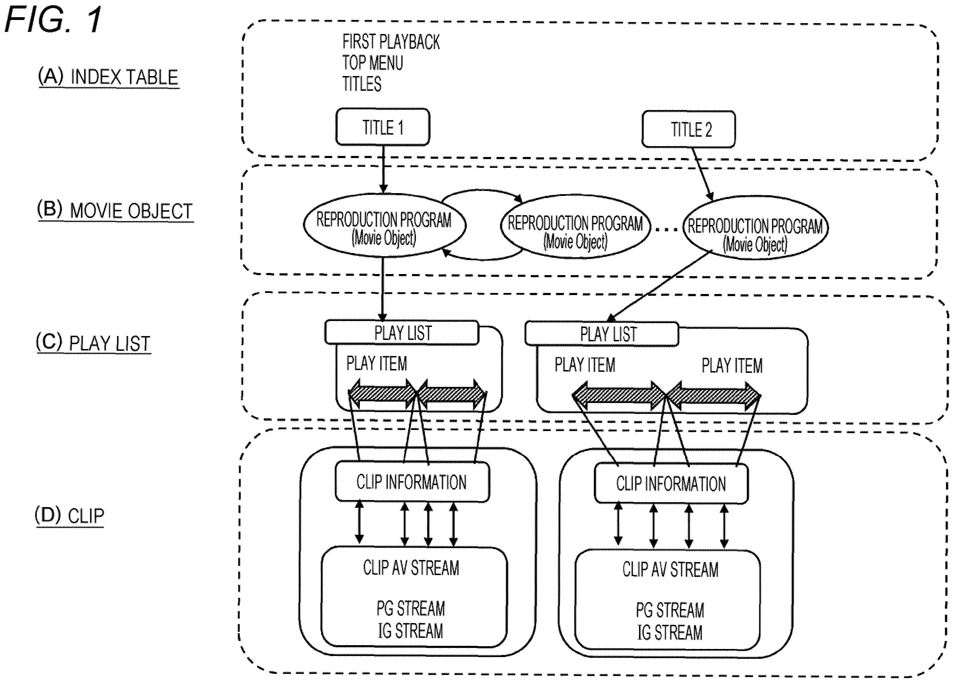

With reference to Fig. 1, a management structure (hereinafter, also referred to as a BDMV format) of a content, which is Audio/Video (AV) data or the like, recorded in a BD-ROM, a read-only type BD, will be explained.

For example, a bit stream such as Moving Picture Experts Group (MPEG) video, MPEG audio, and the like, which is encoded by an encoding method and multiplexed according to an MPEG2 system, is referred to as a clip AV stream (or an AV stream). The clip AV stream is recorded in a BD as a file according to a file system defined by "Blu-ray (registered trademark) Disc Read-Only Format, part 2, which is one of BD-related standards. The file of the clip AV stream is referred to as a clip AV stream file (or an AV stream file).

The clip AV stream file is a unit of management in the file system, and information or the like needed to reproduce the clip AV stream file (of the clip AV stream) is recorded as a database in a BD. This database is defined in "Blu-ray (registered trademark) Disc Read-Only Format, part 3, which is one of the BD standards.

Fig. 1 is a diagram for explaining an outline of a BDMV format.

The BDMV format includes four layers.

The lowest layer is a layer to which the clip AV stream belongs and will also be referred to as a clip layer according to need.

The layer immediately above the clip layer is a layer to which a play list (Movie PlayList), which is used to specify a reproducing part in the clip AV stream, belongs and will also be referred to as a play list layer.

The layer immediately above the play list layer is a layer to which a movie obj ect (Movie Object) including a command or the like that specifies a reproducing order of the play list or the like belongs and will also be referred to as an object layer.

The layer immediately above the obj ect layer (the highest layer) is a layer to which an index table which manages titles or the like stored in the BD belongs and will also be referred to as an index layer.

The clip layer, play list layer, object layer, and index layer will be further described.

To the clip layer, a clip AV stream, clip information (Clip Information) and the like belong.

The clip AV stream is a stream in which video data, audio data, or the like as content data is formed as a TS (MPEG2 transport stream (TS)).

The clip information (Clip Information) is information related to a clip AV stream and is recorded as a file in the BD.

Here, in the clip AV stream, a stream of graphics such as a subtitle, a menu, and the like is also included according to need.

The stream of a subtitle (graphic) is referred to as a presentation graphics (PG (Presentation Graphics)) stream, and a stream of a menu (graphic) is referred to as an interactive graphic (IG (Interactive Graphics)) stream.

Further, a pair of a clip AV stream file and a file (clip information file) of corresponding clip information (clip information related to a clip AV stream of the clip AV stream file) is referred to as a clip (Clip).

The clip is an object including a clip AV stream and clip information.

A plurality of positions including a beginning position (time) and a last position (time) in a case where the content corresponding to the clip AV stream composing the clip is developed on a time axis are set as access points. The access points are mainly specified by time stamps in a play list (PlayList) in the upper layer.

The clip information composing the clip includes an address (logical address) of the position of the clip AV stream, which is indicated by the access points specified by the play list with the time stamps.

To the playlist layer, a playlist (Movie PlayList) belongs.

The playlist includes an AV stream file to be reproduced and a play item (PlayItem) including a reproduction start point (IN point) and a reproduction end point (OUT point), which specify a reproducing part of the AV stream file.

Thus, the playlist includes a collection of play items.

Here, the reproduction of the play item means a reproduction of a zone of the clip AV stream, which is specified by the IN point and OUT point included in the play item.

To the object layer, a movie object (Movie Object) and a Blu-ray (registered trademark) disc Java (registered trademark) object (BD-J Object) belong.

The movie object includes terminal information that collectively operates a high definition movie (HDMV) navigation command program (navi command) and the movie obj ect.

The navi command is a command to control the reproduction of the play list. The terminal information includes information used to allow user's interactive operation on a BD player that reproduces the BD. In the BD player, user's operation such as menu calling and title searching is controlled on the basis of the terminal information.

The BD-J object is a Java (registered trademark) program and can provide the user with a more advanced (smarter) interactive function, compared to the navi command.

To the index layer, the index table (Index table) belongs.

The index table is a top-level table that defines a title of a BD-ROM disc.

Entries (fields) of the index table correspond to titles, and each entry is linked to an object (movie object, BD-J object) of the title (HDMV title, BD-J title) corresponding to the entry.

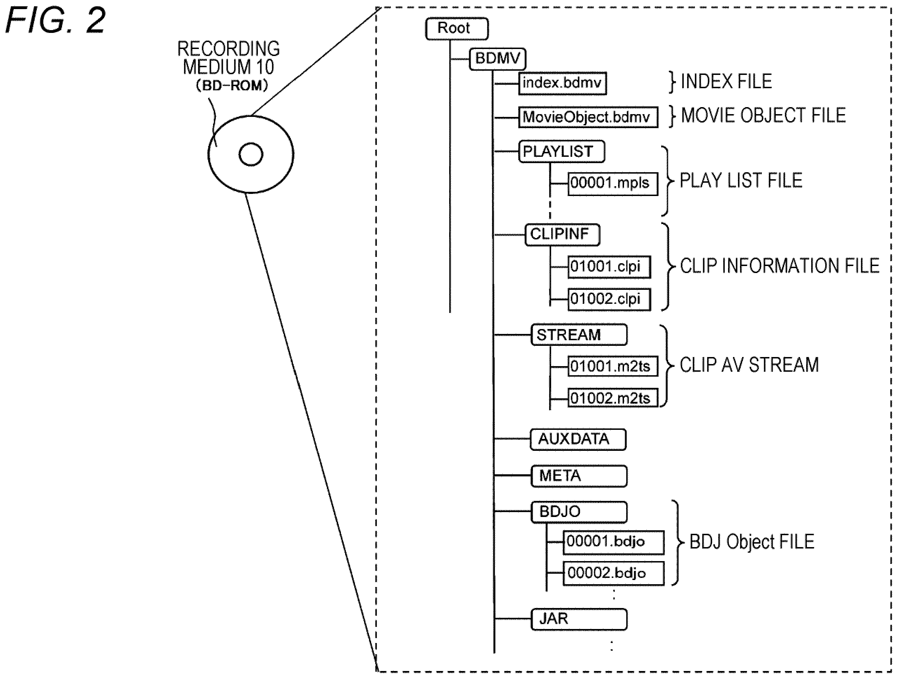

Fig. 2 is a diagram explaining a management structure of files in a recording medium (BD) 10.

In the BD, files are hier archically managed in a directory structure.

The directories in the highest layer in the BD is formed as a root (root) directory.

Immediately under the root directory, there is a directory "BDMV."

In the directory "BDMV," the files in the BDMV format described in Fig. 1 is stored.

Immediately under the directory "BDMV," two files of the files "index.bdmv" and "MovieObject.bdmv" are stored. Here, immediately under the directory "BDMV, " files other than the files "index.bdmv" and "MovieObject.bdmv" cannot be stored (except for directories).

The file "index.bdmv" includes the index table described in Fig. 1 as information related to the menu for reproducing the BD.

The BD player reproduces (a screen of) an initial menu including content items for playing all BD contents, playing only specific chapter, playing repeatedly, displaying a predetermined menu, and the like for example, on the basis of the file "index.bdmv."

Further, a movie object (Movie Object) to be executed when each item is selected may be set to the file "index.bdmv," and in a case where the user selects one of the items from the initial menu screen, the BD player executes a command of the Movie Object which is set to the file "index.bdmv."

The file "MovieObject.bdmv" is a file including information of Movie Object. The Movie Object includes a command that controls the reproduction of the PlayList recorded in the BD, and the BD player reproduces the content (title) recorded in the BD by selecting and executing one of the Movie Objects recorded in the BD for example.

Immediately under the directory "BDMV, " directories of "PLAYLIST," "CLIPINF," "STREAM," "AUXDATA," "META," "BDJO," "JAR," and "BACKUP" are provided.

In the directory "PLAYLIST, " a database of the playlist is stored. In other words, in the directory "PLAYLIST," a file "xxxxx.mpls" of the playlist is stored. As a file name of the file "xxxxx.mpls," a file name including a five-digit number "xxxxx" and an extension "mpls" is used.

In the directory "CLIPINF, " a database of clips is stored. In other words, in the directory CLIPINF," clip information files "xxxxx.clpi" corresponding to respective clip AV stream files are stored. As the file name of the clip information file "xxxxx.clpi," a file name including a five digit number "xxxxx" and an extension "clpi" is used.

In the directory "STREAM," a clip AV stream file "xxxxx.m2ts" is stored. In the clip AV stream file "xxxxx.m2ts," a TS is stored. As the file name of the clip AV stream file "xxxxx.m2ts, " a file name including a five-digit number "xxxxx" and an extension "m2ts" is used.

Here, as the file names of the clip information file "xxxxx.clpi" and clip AV stream file "xxxxx.m2ts" that compose a clip, a corresponding file name is used with different extensions. With this configuration, a clip information file "xxxxx.clpi" and a clip AV stream file "xxxxx.m2ts" that compose one clip can be easily identified.

In the directory "AUXDATA," a sound file, a font file, a font index file, a bitmap file, and the like, which are used to display the menu and the like, are stored.

In the directory "META," a metadata file is stored. In the directory "BDJO" and directory "JAR," a BD-J object file is stored. The BD-J object file is a file of a BD-J application or the like that stores a JAVA (registered trademark) program, a command, and the like.

In the directory "BACKUP," a backup of a file recorded in the BD is stored.

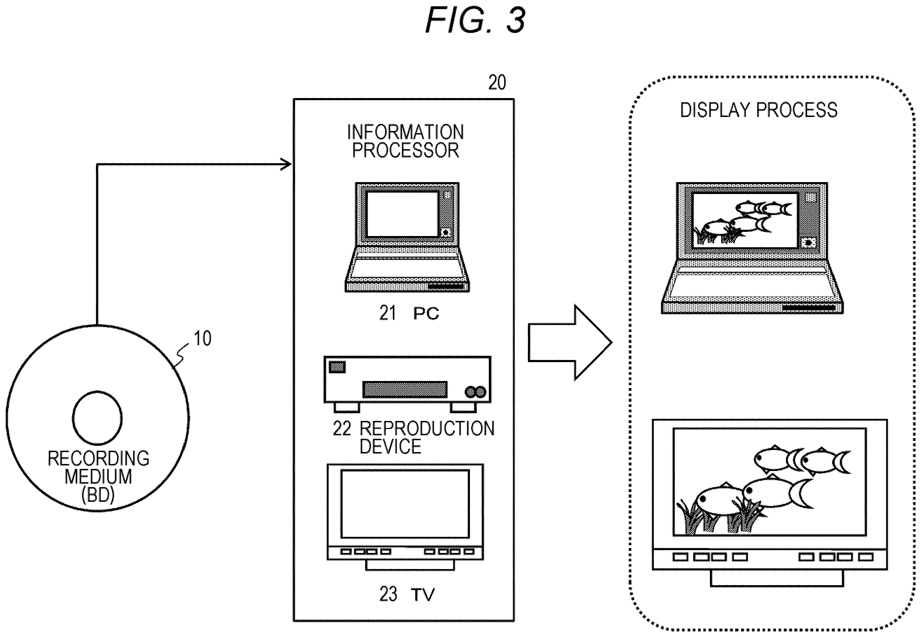

Fig. 3 is a diagram illustrating an example of a process for reproducing data read from the recording medium 10 including recorded data, which has been described with reference to Figs. 1 and 2.

The recording medium 10 is attached to an information processing device 20 such as a PC 21, a reproduction device 22, a TV 23, or the like for example and is reproduced.

The information processing device 20 such as the PC 21, reproduction device 22, TV 23, or the like has a BD drive and a configuration to read data from the BD.

The information processing device 20 obtains a content read from the recording medium 10, which is, more specifically, an image or voice data stored in a clip AV stream file, and executes a content reproducing process according to a reproduction control information file such as a play list file.

The image included in the reproduction data is output to a device including a display unit, which is a display unit (display) such as a PC, a TV, or the like for example, to be displayed, as illustrated in Fig. 3.

### [2. Example of image output process using BD-J application in information processing device]

Next, an example of an image output process using the BD-J application executed by the information processing device 20 that performs a process for reproducing data from the recording medium 10 including recorded data, which has been described with reference to Figs. 1 and 2 will be described.

As described with reference to Fig. 2, in the recording medium 10, the BD-J application is recorded.

The information processing device 20 has a data processing unit including a CPU or the like that has a program data executing function and executes a Java (registered trademark) virtual machine in the data processing unit to execute the BD-J application on the Java (registered trademark) virtual machine.

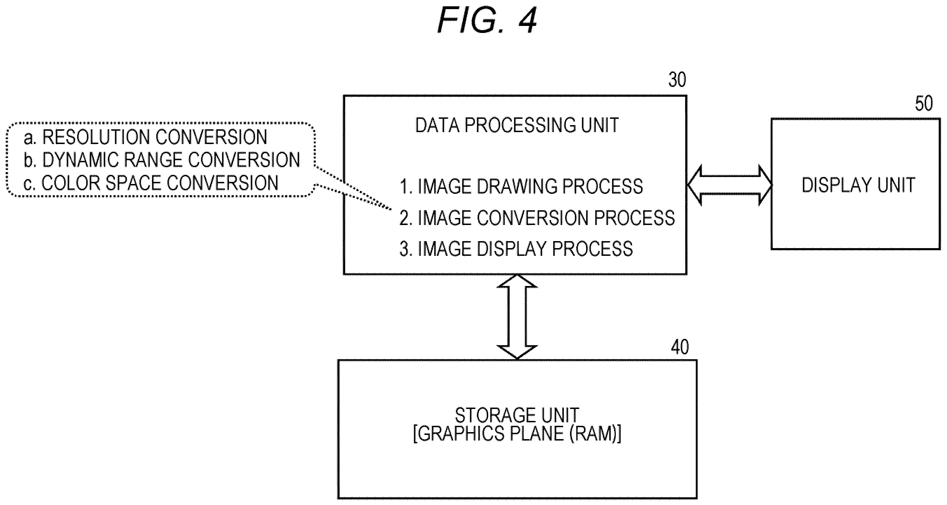

Fig. 4 is a diagram illustrating an example of a configuration, which is a part of a configuration of the information processing device 20 and used to output an image.

A data processing unit 30 of the information processing device 20 executes the BD-J application, and sequentially draws and stores each image frame to the storage unit 40.

Here, the storage unit 30 that stores image data is also referred to as a graphics plane. Various image conversions can be performed on image data stored in the graphics plane. Here, a hardware configuration of the storage unit (graphics plane) 40 includes a RAM.

The data processing unit 30 further executes an image conversion process on an image stored in the storage unit 40. The image conversion is, for example, an image conversion process according to a display function of a display unit 50 and, more specifically, for example, a conversion process of one of or a combination of the followings.
a. resolution conversion process
b. dynamic range conversion process
c. color space conversion process

The data processing unit 30 executes an image conversion process of at least one of the above a to c, according to the display function of the display unit 50, for example.
a. The resolution conversion is specifically a process or the like to convert a 2K image (1920x1080 pixels) to a 4K image (3840x2160 pixels) for example.
b. The dynamic range conversion process is specifically a process or the like to convert a standard dynamic range (SDR) image to a high dynamic range (HDR) image for example.
c. The color space conversion process is specifically a process or the like to convert a BT.709 color space to a BT.2020 color space for example.

Here, the BT.2020 color space has a wider range of displayable colors compared to BT. 709 color space and provides a natural color expression relevant to a color space viewed by human eyes.

These image conversions are performed according to a number of pixels that the display unit can output, a dynamic range, and a color space thereof.

The data processing unit 30 is made to perform the image conversion process on the image stored in the storage unit 40, according to a specification of the display unit 50.

The data processing unit 30 outputs a converted image data to the display unit 50.

The image to be displayed on the display unit 50 is an image converted in a predetermined image conversion process and, an ultra high definition (UHD) image is output in a case where the display unit 50 is a display unit that can output a UHD image, which has a high resolution, a wide dynamic range, and a wide output color space, for example.

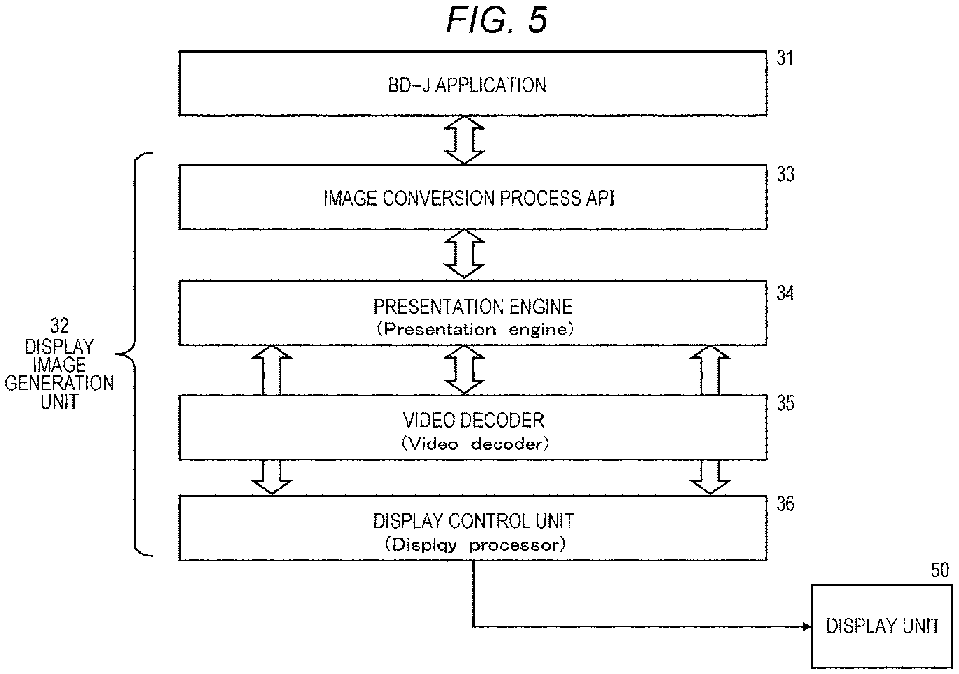

Next, with reference to Fig. 5, a detailed configuration example of the data processing unit 30 that executes the BD-J application and the like will be described. Fig. 5 is a diagram illustrating a functional configuration for executing an image-related process in the data processing unit 30. The data processing unit 30 executes a process by using the following functions illustrated in Fig. 5.
(a) BD-J application 31
(b) image conversion process application programming interface (API) 33
(c) presentation engine (presentation engine) 34
(d) video decoder (Video decoder) 35
(e) display control unit (Display processor) 36

Here, in the above configurations (a) to (e), the following configurations are referred to as a display image generation unit 32 to distinguish from the BD-J application 31.
(b) image conversion process API 33
(c) presentation engine (presentation engine) 34
(d) video decoder (Video decoder) 35
(e) display control unit (Display processor) 36

The display image generation unit 32 executes a conversion process and a display control on the image that the BD-J application 31 draws on the storage unit (graphics plane) 40.

Processes executed by each configuration illustrated in Fig. 5 will be described.
(a) The BD-J application 31 executes aprocess for drawing an image on the storage unit (graphics plane) 40.
(b) The image conversion process API 33 executes an image conversion process applied with the API that executes image conversion processes of a. resolution conversion process, b. dynamic range conversion process, and c. color space conversion process.

For example, in a case where resolution conversion process is executed, the BD-J application 31 calls the resolution conversion API and requests a change (setting) of the resolution or the like.

In response to the request from the BD-J application, a resolution setting API changes the resolution by directly or indirectly controlling any of the presentation engine, video decoder, and display control unit according to need.

In a case where the dynamic range conversion process and color space conversion process are performed, the processes are performed by using the APIs that performs the conversion processes respectively.

Here, in Fig. 5, the presentation engine (presentation engine) provides a decoding function and a presentation function (Presentation functions) of audio, video, and HDMV graphic to an unillustrated playback control engine (Playback Control Engine) that controls the BD reproduction.

Further, in Fig. 5, the video decoder (Video decoder) decodes an image. Further, the display control unit (Display processor) outputs the image stored in the storage unit (graphics plane) 40 or a converted image to the display unit 50.

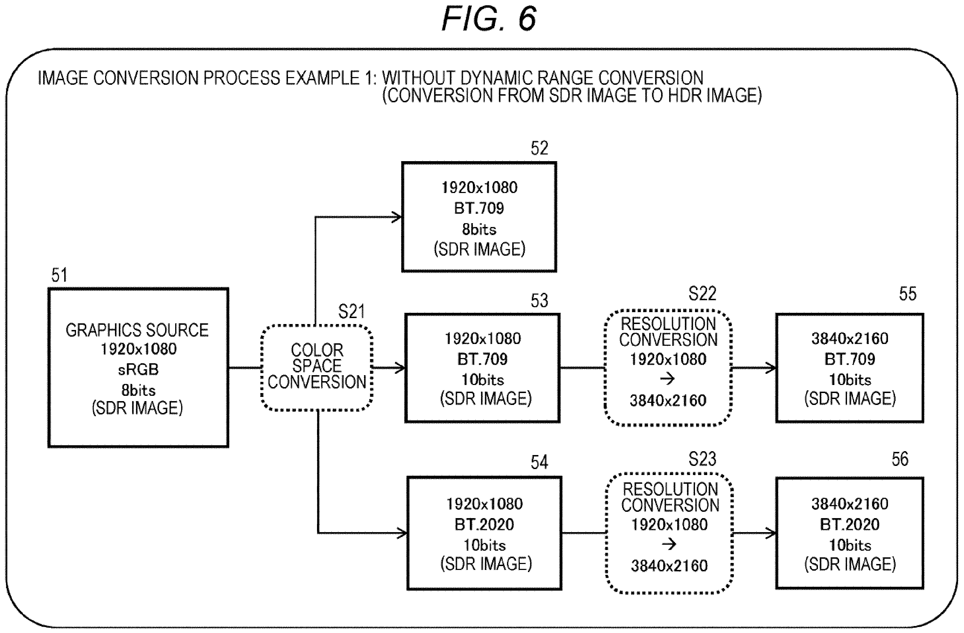

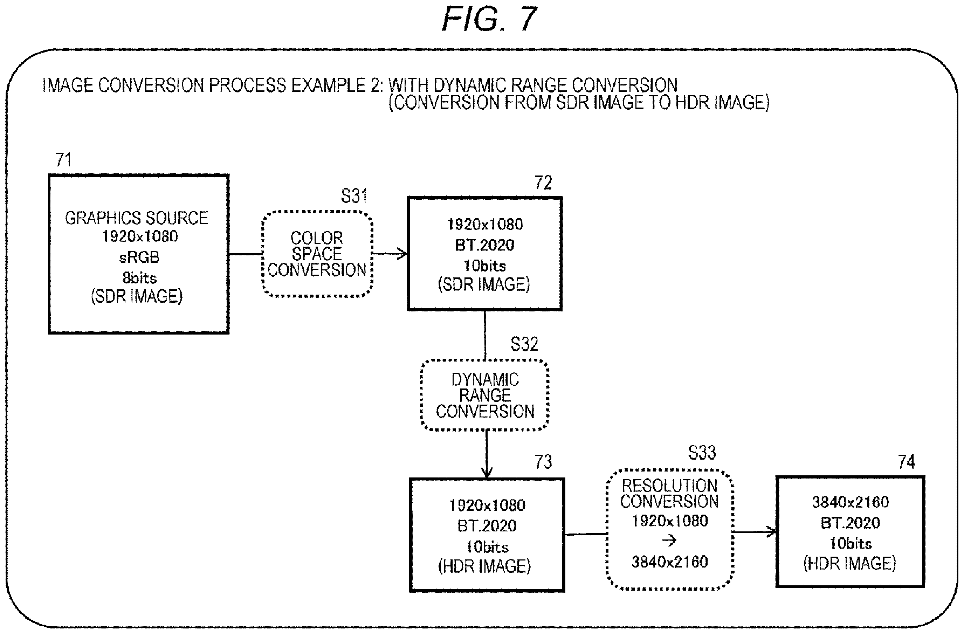

An illustrative example of the image conversion process that the data processing unit 30 executes will be described with reference to Figs. 6 and 7.

Fig. 6 is an example of an image conversion in a case where the dynamic range conversion process (a conversion from an SDR image to an HDR image) is not performed.

A graphics source 51 is an image that the BD-J application draws on the storage unit 30.

In the example illustrated in Fig. 6, the graphics source 51 is an image of 1920×1080 pixels and is an SDR image which provides an 8-bit expression respectively in RGB in each pixel unit.

The data processing unit 30 executes a color space conversion in step S21 and generates one of an image 52, an image 53, and an image 54 illustrated in Fig. 6.

The image 52 is an image of 1920x1080 pixels, has color information corresponding to color space BT.709, and is an SDR image having an 8-bit expression in each pixel unit.

The image 53 is an image of 1920x1080 pixels, has color information corresponding to color space BT.709, and an SDR image having a 10-bit expression in each pixel unit.

The image 54 is an image of 1920x1080 pixels, has color information corresponding to color space BT.2020, and an SDR image having a 10-bit expression in each pixel unit.

In this manner, the data processing unit 30 executes a color space conversion in step S21 and generates one of the image 52, image 53, and image 54 illustrated in Fig. 6.

The process in step S22 illustrated in Fig. 6 is a resolution conversion process performed on the image 53. The data processing unit 30 executes a resolution conversion on the image 53.

The image 53 is an image of 1920x1080 pixels, has color information corresponding to color space BT.709, and is an SDR image having a 10-bit expression in each pixel unit.

The data processing unit 30 executes a resolution conversion on the image 53 and generates an image 55.

The image 55 is an image of 3840x2160 pixels, has color information corresponding to color space BT.709, and is an SDR image having a 10-bit expression in each pixel unit.

Further, the process in step S23 illustrated in Fig. 6 is a resolution conversion process performed on the image 54. The data processing unit 30 executes the resolution conversion on the image 54.

The image 54 is an image of 1920x1080 pixels, has color information corresponding to color space BT.2020, and is an SDR image having a 10-bit expression in each pixel unit.

The data processing unit 30 executes a resolution conversion on the image 54 and generates an image 56.

The image 56 is an image of 3840x2160 pixels, has color information corresponding to color space BT.2020, and is an SDR image having a 10-bit expression in each pixel unit.

Fig. 6 illustrates three conversion process examples as examples of image conversion process executed by the data processing unit 30.
(A) An example of a conversion process for executing only the color space conversion in step S21 on the graphics source 51 which is drawn by the BD-J application and generating an output image 52
(B) An example of a conversion process for executing the color space conversion in step S21 and the resolution conversion in step S22 on the graphics source 51 which is drawn by the BD-J application and generating an output image 55
(C) An example of a conversion process for executing the color space conversion in step S21 and the resolution conversion in step S23 on the graphics source 51 which is drawn by the BD-J application and generating an output image 56

The data processing unit 30 executes one of the above processes according to an image manner which can be output by the display unit 50 for example.

Fig. 7 illustrated next is an example of an image conversion in a case where a dynamic range conversion process (a conversion from the SDR image to the HDR image) is executed.

The graphics source 51 is an image drawn on the storage unit 40 by the BD-J application.

As in the description given with reference to Fig. 6, in the example illustrated in Fig. 7, the graphics source 51 is an image of 1920x1080 pixels and is an SDR image in which has an 8-bit RGB expression in each pixel unit.

The data processing unit 30 executes a color space conversion in step S31 and generates an image 72 illustrated in Fig. 7.

The image 72 is an image of 1920×1080 pixels, has color information corresponding to color space BT.2020, and is an SDR image having a 10-bit expression in each pixel unit.

In this manner, the data processing unit 30 executes the color space conversion in step S31 and generates the image 72 illustrated in Fig. 7.

The process in step S32 illustrated in Fig. 7 is a dynamic range conversion process performed on the image 72. The data processing unit 30 executes the dynamic range conversion process on the image 72.

The image 72 is an image of 1920x1080 pixels, has color information corresponding to color space BT.2020, and is an SDR image having a 10-bit expression in each pixel unit.

The data processing unit 30 executes the dynamic range conversion process on the image 72 and generates an image 73.

The image 73 is an image of 1920x1080 pixels, has color information corresponding to color space BT.2020, and is an HDR image having a 10-bit expression in each pixel unit.

Further, the process in step S33 illustrated in Fig. 7 is a resolution conversion process performed on the image 73. The data processing unit 30 executes the resolution conversion on the image 73.

The image 73 is an image of 1920x1080 pixels, has color information corresponding to color space BT.2020, and is an HDR image having a 10-bit expression in each pixel unit.

The data processing unit 30 executes the resolution conversion on the image 73 and generates an image 74.

The image 74 is an image of 3840x2160 pixels, has color information corresponding to color space BT.2020, and is an HDR image having a 10-bit expression in each pixel unit.

Fig. 7 illustrates an example of a conversion process as an example of the image conversion process executed by the data processing unit 30.
(D) An example of a conversion process in which the color space conversion in step S31, dynamic range conversion process in step S32, and resolution conversion in step S33 are executed on the graphics source 71 drawn by the BD-J application and the output image 74 is generated.

The data processing unit 30 execute the above conversion process according to an image manner which can be output by the display unit 50, for example.

In this manner, the data processing unit 30 executes a conversion process of an image drawn in the storage unit by an execution of the BD-J application and generates an image to be output to the display unit 50.

### [3. Problem of image output process including image conversion]

Next, a problem of an image output process, which is an image output process including an image conversion process, in the information processing device having a configuration described with reference to Figs. 4 and 5 will be described.

In a case where a 4K image, a high-quality image having a wide dynamic range image or a BT.2020 color space, and a so-called UHD image are output, as it is understood from the above description, the storage unit (graphics plane) 40 illustrated in Fig. 4 is used as a storage area that supports the various image conversion processes such as a resolution conversion, a dynamic range conversion, a color space conversion, and the like.

The data processing unit 30 draws an image in the storage unit (graphics plane) 40 by executing the BD-J application 31 illustrated in Fig. 5.

The storage unit (graphics plane) 40 is a storage area used to perform various image conversions on an image (BD-J graphics) drawn by executing the BD-J application 31.

In other words, the storage unit (graphics plane) 40 is
a storage area that has a function to increase the resolution of the image,
a storage area that supports a dynamic range conversion of the image, and
has a function to convert a plurality of color spaces. The color space conversion is a process to convert BT. 709 data into BT.2020 data, for example.

In a case where a drawing process to the storage unit (graphics plane) 40, the BD-J application 31 performs a process by using one of the following two methods.

### (Drawing method 1) Direct drawing (Direct drawing)

In a drawing method using the direct drawing (Direct drawing), the BD-J application 31 itself issues a drawing command and executes a drawing process. In Java (registered trademark), a method such as

```
       "drawLine() method"
```

is provided and drawing (drawing) by an application can be performed.

### (Drawing method 2) Repaint (Repaint)

In a drawingmethod using the repaint (Repaint), a drawing process using a widget provided by a system is executed. In Java (registered trademark), a plurality of applications called Abstract Windowing Toolkit (AWT) component provide a common widget. This drawing method is a method for executing a drawing process using this widget.

The BD-J application 31 executes the drawing process by using one of the above drawing processes.

Here, for example, even in a conventional device (legacy device) that can reproduce only SDR images, in order to enable an SDR image reproducing process, it is preferable that the BD-J application draws by using only an SDR graphics source and only a reproduction device that can reproduce HDR images converts the drawing image into an HDR image.

A problem that occurs in a case where a reproduction device performs an image conversion in this manner will be described.

### [3-1. Screen tearing]

In the following, as a problem, "screen tearing" will be described.

Basically, in BD-J graphics, there is a problem that screen tearing is caused because a process for drawing image by a graphics command executed by a processer such as a CPU and a monitor for reading and displaying a completed graphics plane work in an asynchronous manner.

Screen tearing is a phenomenon that a plurality of image frames are displayed, as overlapping on each other, on the display unit and is caused in a case where the process for generating a display image does not match with the frame display speed, for example.

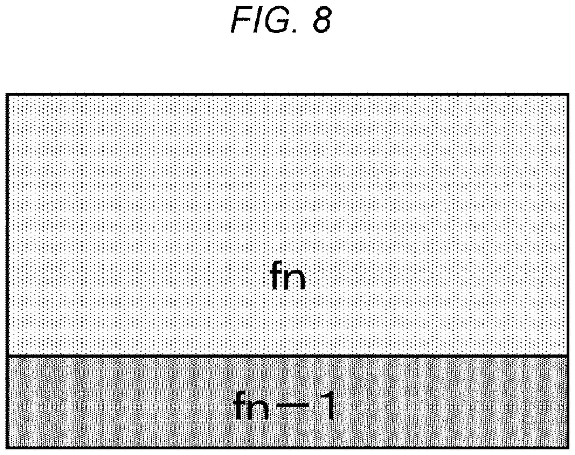

For example, as illustrated in Fig. 8, the phenomenon is that, at a timing of displaying a frame (fn), a display image generation of a part of the frame (fn) cannot be completed and a previous display frame (fn-1) is displayed in a part of the screen.

Regarding such screen tearing, 1) a similar problem also occurs in a personal computer or the like and it is not a problem that occurs only with the BD-J application, and 2) it is not a unique problem in a graphics plane that supports any kind of data conversion process.

However, the screen tearing it self needs to be prevented since the screen tearing itself looks like an operation failure.

As a method to avoid the screen tearing, there may be a case that a method of double buffering or triple buffering for creating and storing a plurality of drawn images in advance in buffers is used.

Regarding general screen tearing, an occurrence of the screen tearing can be avoided by introducing the double buffering or triple buffering.

However, in a case where the BD-J application generates a drawn image (BD-J graphics) and draws a frame image, for example, the BD-J application performs a drawing process as executing a plurality of drawing commands.

In this drawing process of each frame image, a border of an undividable drawing command (a border between frames) cannot be recognized by a display control unit or the like that displays an image.

In other words, the problem to be solved is that a graphics system side such as a display control unit or the like does not have a method to recognize whether or not the drawing on the graphics plane by the BD-J application is completed.

### [3-2. Load of image conversion process]

In addition to the above screen tearing problem, there is a problem that, in a case where the image stored in the storage unit (graphics plane) 40 is converted, the load of this conversion process becomes so large that the process cannot be completed before a process for displaying each frame.

For example, a process to convert a color space of an image stored in the storage unit (graphics plane) 40 will be described.

For example, in a case where the display unit (monitor) has a refresh rate of 60 Hz, a process for converting color space of the graphics plane every 1/60 seconds before displaying causes a great hardware load and is not reasonable.

It is very rare that all pixels of the image stored in the storage unit (graphics plane) 40 needs to be rewritten every 1/60 seconds, and the load can be reduced by setting only an updated area of the graphics as a target of the conversion. However, in a case where such an area-limited process is performed, on the other hand, this cases a problem that color space information, dynamic range information, or the like need to be stored for each pixel.

The most preferable method is to have a configuration that the display image generation unit 32 illustrated in Fig. 5 can recognize whether or not the drawingprocess in the storage unit (graphics plane) 40 by the BD-J application 31 illustrated in Fig. 5 is "completed." In a case where the display image generation unit 32 recognizes the timing of the drawing completion by the BD-J application 31, the display image generation unit 32 can start the conversion at that timing and perform a process to display.

Here, regarding drawing a bitmap image, the above problem can be avoided if the application defines a number of pixels drawable in one second. However, the BD-J application 31 executes drawing to which a plurality of commands are applied and a quantitative control of the drawing amount as in the case of the bitmap drawing, is difficult to be used for controlling the command-applicable drawing.

### [4. Outline of process executed by information processing device according to the present disclosure]

Next, an outline of a process executed by the information processing device according to the present disclosure, which solves the above problems, will be described.

As described above, in a process for drawing to the storage unit (graphics plane) 40, the BD-J application 31 performs a process applied with one of the following two methods.

### (Drawing method 1) Direct drawing (Direct drawing)

The BD-J application 31 itself issues a drawing command and executes a drawing process.

### (Drawing method 2) Repaint (Repaint)

A drawing process is executed by using a widget (a widget, which is called an Abstract Windowing Toolkit (AWT) component and is common in a plurality of applications), which is provided by the system.

The BD-J application 31 performs a process applied with one of the above two methods.

In a case where the above (drawing method 2), Repaint (Repaint), is used, a drawing process using a widget (a widget, which is called an Abstract Windowing Toolkit (AWT) component and is common in a plurality of applications), which is provided by a system is executed.

By using an AWT paint model, a repaint() method of a root container requests each component update() method and a drawing process by a requested method is performed.

Thus, in the display image generation unit 32 illustrated in Fig. 5, a display output is waited until an execution of the update() method is completed so that the output timing of the display image can be controlled.

However, in a case where the BD-J application 31 executes the above (Drawingmethod 1), Direct drawing (Direct drawing), to perform a drawing process, the BD-J application 31 itself issues a drawing command and executes the drawing process.

In this case, the display image generation unit 32 illustrated in Fig. 5 does not have a method to recognize whether or not the BD-J application 31 has issued a drawing command.

In a drawing process of one image frame, the BD-J application 31 sequentially executes a plurality of drawing commands.

In other words, in a case where the BD-J application 31 issues drawing commands #1, #2,..., #N, and the image drawing is performed according to the drawing commands #1 to #N, the display image generation unit 32 cannot recognize whether or not the BD-J application 31 issues further drawing commands, that is, whether or not the BD-J application has issued a drawing command.

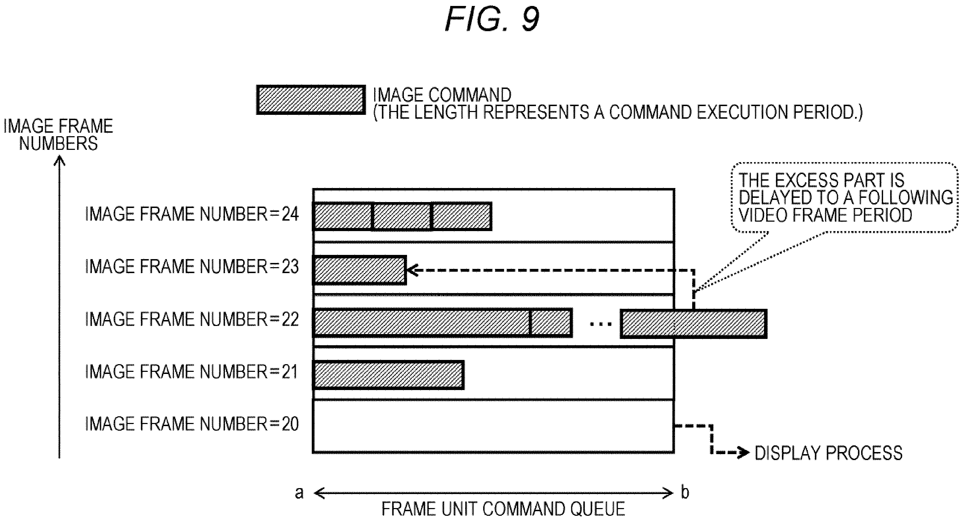

Fig. 9 is a diagram illustrating an example of drawing command setting for each image frame and an executing manner.

The horizontal axis a-b represents a drawing command queue storage area corresponding to one image frame.

The vertical axis represents image frames (frame numbers 20 to 24), from the below, which are sequentially displayed as time passes.

The image frame of the image frame number 20 is in a process for transferring to a display process including a decoding process and a conversion process after the drawing based on all drawing commands is completed.

For the image frames 21 to 24, the drawing commands to be executed, which are needed for drawing each image frame, are illustrated.

The number of the drawing commands needed of each image frame and time needed to execute the commands differ.

For the image frame 22, drawing commands that exceed the command queue in a frame unit need to be executed. The excess part is set in a queue for the following frame (image frame 23).

Such a setting may delay a completion of the execution of the drawing commands.

On the other hand, since the display period of the individual image frame is constant, the execution period of the drawing command occurs across the period of drawing processes of a plurality of image frames and this results in that an image in process of drawing is sent to the display.

In order to solve such a problem, a call command of a drawing completion notification API for notifying an end of the drawing process by one drawing command is set, as one of the drawing commands, to the BD-J application 31 that executes an image drawing based on the drawing command.

The BD-J application 31 executes the call command of the drawing completion notification API, for example, at a timing of a completion of the drawing process based on one drawing command, which is a timing of completion of the drawing process by a series of drawing commands that draw one image frame.

The display image generation unit 32 can detect that the drawing process by one drawing command is completed by detecting an execution of the call command of the drawing completion notification API.

The display image generation unit 32 can recognize a timing of a completion of drawing on the storage unit (graphics plane) 40 based on the drawing command by detecting that the BD-J application 31 executes a call process of the drawing completion notification API.

Here, as the drawing completion notification API, for example,

```
       "java.awt.Toolkit#sync() method"
```

may be used.

The display image generation unit 32 does not output an image drawn on the storage unit (graphics plane) 40 without the call of the drawing completion notification API, which is "java.awt.Toolkit#sync() method".

Here, in a case where the call of drawing completion notification API, which is "java.awt.Toolkit#sync() method," is executed a plurality of times during one image frame, the image frame may be skipped. Thus, it is set to prohibit to execute to call the drawing completion notification API, that is, "java.awt.Toolkit#sync() method" a plurality of times in a row or execute to call the drawing completion notification API, which is "java.awt.Toolkit#sync() method," a plurality of times in a row before and after an issuance of a command that has a small drawing amount.

An example of a sequence of executing drawing commands and drawing completion notifications API, "java.awt.Toolkit#sync() method" call command.

```
       drawing command #1
       drawing command #2
 ...
       drawing command #N
       java.awt.Toolkit#sync()
       drawing command #N+1
       drawing command #N+2
 ...
       drawing command #N+M
       java.awt.Toolkit#sync()
```

An example of the command setting is a setting to execute from drawing command #1 to drawing command #N atomically or sequentially. Here, during the execution, the progress is not output to an end user.

For example, in a case of a configuration that the BD-J application executes the call process of the drawing completion notification API, which is "java.awt.Toolkit#sync() method," at a timing of a completion of a series of drawing commands corresponding to one image frame, the display image generation unit can recognize the completion of the drawing process in image frame unit and can execute an image conversion on the image frame.

In order to execute the above described series of commands and execute an image conversion on the image after the completion of drawing by the drawing command, the storage unit (graphics plane) 40 that stores data to be drawn by the BD-J application 31 may be made in a configuration of double buffering, triple buffering, or the like.

Following two embodiments will be described in order.
(Embodiment 1) a configuration that the storage unit (graphics plane) 40 is made with double buffering
(Embodiment 2) a configuration that the storage unit (graphics plane) 40 is made with triple buffering

### [5. (Embodiment 1) An embodiment applied with a configuration with the storage unit (graphics plane) configured with double buffering]

Firstly, as the embodiment 1, an embodiment applied with a configuration with the storage unit (graphics plane) configured with double buffering will be described.

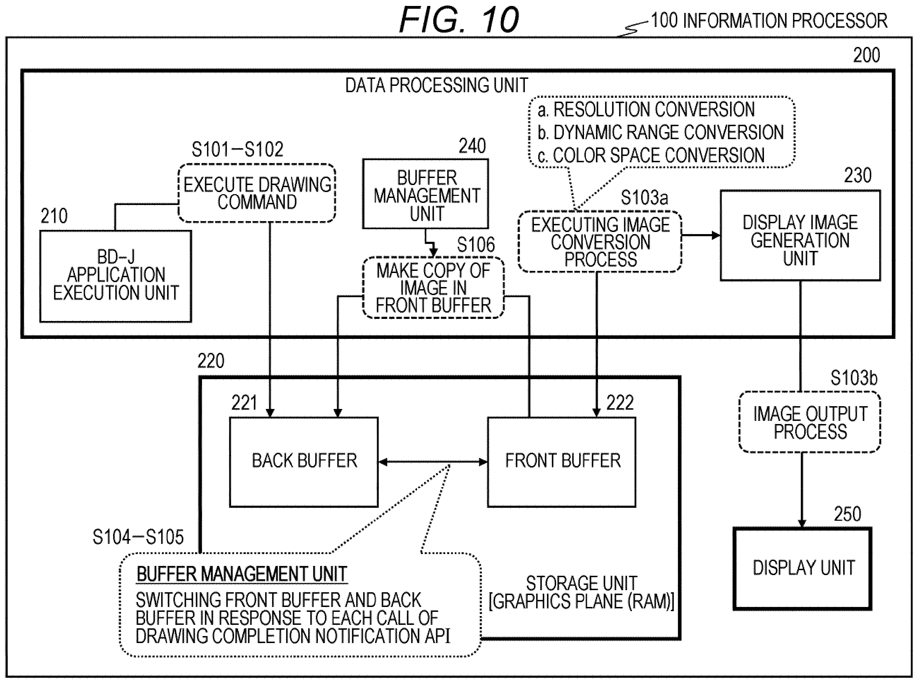

Fig. 10 is a diagram for explaining a configuration and a process of an information processing device 100 according to the present embodiment 1.

Here, Fig. 10 illustrates only a component part used in image processing.

The information processing device 100 includes a data processing unit 200, a storage unit (graphics plane) 220, and a display unit 250.

Here, the display unit 250 may not be an essential configuration of the information processing device 100 and a display device connected via an unillustrated output unit may be used.

The data processing unit 200 includes
a BD-J application execution unit 210,
a display image generation unit 230, and
a buffer management unit 240.

The BD-J application execution unit 210 corresponds to the BD-J application 31, which is described above with reference to Fig. 5.

The display image generation unit 230 corresponds to the display image generation unit 32, which is described above with reference to Fig. 5, and executes the processes executed by the image conversion process API 33, presentation engine 34, video decoder 35, and display control unit 36.

The buffer management unit 240 executes a process for switching a back buffer 221 and a front buffer 222 in the storage unit (graphics plane) 220, for example.

Here, the display image generation unit 230 executes an image conversion process of at least one of the following a to c.
a. resolution conversion process
b. dynamic range conversion process
c. color space conversion process
In other words, the display image generation unit 230 determines an image conversion manner according to a display function of the display unit 250 that outputs an image and executes the image conversion process of at least one of a to c.

The storage unit (graphics plane) 220 has a double buffering configuration including two buffers of
a back buffer 221 and
a front buffer 222.

Processes are executed in order of the processes in steps S101 to S106 of Fig. 10.

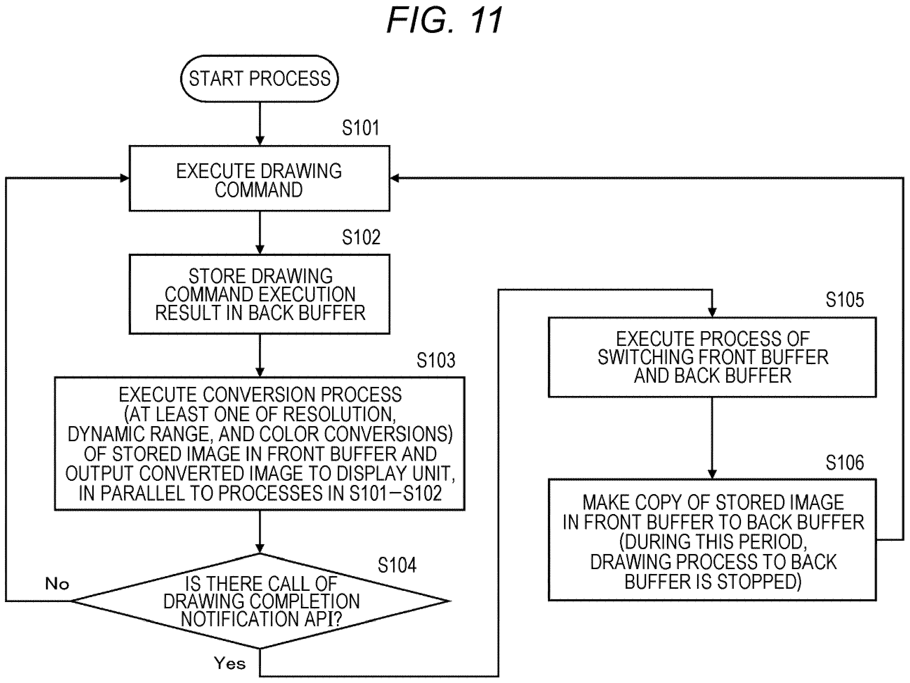

The flowchart illustrated in Fig. 11 is a flow of the processes in steps S101 to S106 of Fig. 10.

The data processing unit illustrated in Fig. 10 has a CPU, which has a program execution function, reads a program stored in an unillustrated memory, and executes processes according to the flow of Fig. 11.

In the following, details of the respective processes in steps S101 to S106 illustrated in Figs. 10 and 11 will be described in order.

### (Step S101)

The BD-J application execution unit 210 of the data processing unit 200 in the information processing device 100 executes a drawing command defined by the BD-J application in step S101.

### (Step S102)

Next, the BD-J application execution unit 210 stores an image, which is a result of executing the drawing command defined by the BD-J application, in the back buffer 221 of the storage unit 220 in step S102.

### (Step S103)

Next, the display image generation unit 230 of the data processing unit in the information processing device 100 executes a conversion process (at least one of the resolution and dynamic range, or color conversions) of an image stored in the front buffer 222, in parallel to a back buffer storing process of the execution and execution result of the drawing command executed in steps S101 to S102, and outputs a converted image to the display unit 250.

### (Step S104)

Next, the display image generation unit 230 determines, in step S104, whether or not there is a call of a drawing completion API from the BD-J application execution unit 210.

It is determined whether or not there is a call of a drawing completion notification API, that is "java.awt.Toolkit#sync() method" from the BD-J application execution unit 210.

In a case where there is not a call of the API, the processes in steps S101 to S103 are repeated.

In a case where there is a call of the API, processes in step S105 and following steps will be executed.

### (Step S105)

In a case where it is confirmed that there is a call of the drawing completion notification API, that is, "java.awt.Toolkit#sync() method" from the BD-J application execution unit 210, the buffer management unit 240 of the data processing unit 200 in the information processing device 100 performs a switching process between the back buffer 221 and front buffer 222 in the storage unit 220 in step S104.

In other words, the back buffer 221 is set as a front buffer and the front buffer 222 is set as a back buffer.

### (Step S106)

Next, the buffer management unit 240 of the data processing unit 200 makes a copy of a stored image in the front buffer (the back buffer before switching) in the back buffer (the front buffer before switching).

Here, during the copy process period, the drawing process to the back buffer is stopped.

After that, the processes in steps S101 to S106 are repeated.

Switching of drawing process target buffers by using a double buffering configuration described with reference to Figs. 10 and 11 will be described.

For example, it is assumed that the drawing command by the BD-J application is set in a sequence as follows.

```
       drawing command #1
       drawing command #2
 ...
       drawing command #N
       drawing completion notification API
 (java.awt.Toolkit#sync())
       drawing command #N+1
       drawing command #N+2
 ...
       drawing command #N+M
       drawing completion notification API
 (java.awt.Toolkit#sync())
```

The drawing commands #1 to #N are executed on the back buffer 221.

After that,
in a case where the display image generation unit 230 detects an issuance of the drawing completion notification API (java.awt.Toolkit#sync()),
the buffer management unit 240 executes switching between the back buffer 221 and front buffer 222, and further, makes a copy of drawing data stored in the front buffer (the back buffer 221 before switching) in the back buffer (the front buffer 222 before switching).

At this point, in the back buffer after the buffer switching (the front buffer 222 before switching), a result of drawing by the drawing commands #1 to #N are stored.

After that, the BD-J application executes the drawing commands #N+1 to #N+M, a result of execution of the drawing commands #N+1 to #N+M is stored in the back buffer after the buffer switching (the front buffer 222 before switching).

In this manner, before or after an issuance of the drawing completion notification API (java.awt.Toolkit#sync()), the drawing data in one buffer in which a drawing result before an API issuance (a result of executing the drawing commands #1 to #N) is copied to the other buffer, and then, the BD-J application executes subsequent drawing commands (the drawing commands #N+1 to #N+M) on the copied drawing data so that the a continuous command execution without a pause is realized.

Further, by a subsequent issuance of the drawing completion notification API (java.awt.Toolkit#sync()), the buffer that stores the execution result of the drawing command (drawing commands #N+1 to #N+M) is switched to the front buffer, and the image conversion process and image output process are executed on the stored image in the front buffer.

In this manner, according to the present embodiment, all the drawing commands by the BD-J application can be executed for every image frame unit.

Further, the image conversions by the display image generation unit 230 are:
a. resolution conversion process
b. dynamic range conversion process, and
c. color space conversion process.

These processes can be executed on the image frame to which the BD-J application has completed the drawing process, and a subsequent image output process can be output as a converted image, which is completed in each image frame.

### [6. (Embodiment 2) An embodiment applied with a configuration with the storage unit (graphics plane) 40 configured with triple buffering]

Next, as the embodiment 2, an embodiment applied with a configuration with the storage unit (graphics plane) configured with triple buffering will be described.

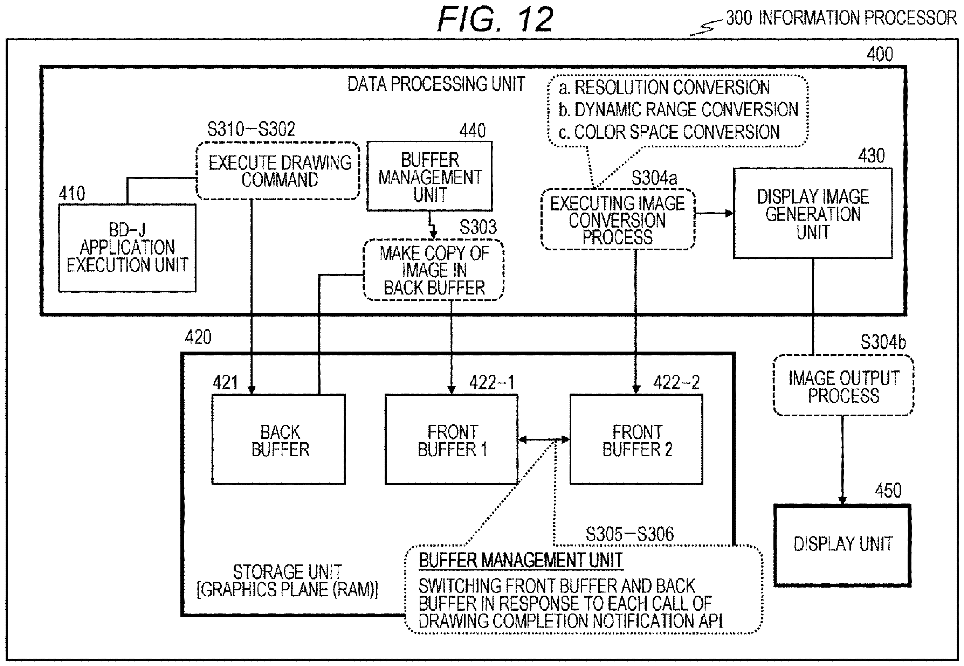

Fig. 12 is a diagram illustrating a configuration example of an information processing device 300 according to the embodiment 2.

Here, Fig. 12 illustrates only a component part used in image processing.

The information processing device 300 includes a data processing unit 400, a storage unit (graphics plane) 420, and a display unit 450.

Here, the display unit 450 may not be an essential component of the information processing device 300, and a display device connected via an unillustrated output unit may be used.

The data processing unit 400 includes
a BD-J application execution unit 410,
a display image generation unit 430, and
a buffer management unit 440.

The BD-J application execution unit 410 corresponds to the BD-J application 31 in the configuration described above with reference to Fig. 5.

The display image generation unit 430 corresponds to the display image generation unit 32 in the configuration described above with reference to Fig. 5, and executes the processes executed by the image conversion process API 33, presentation engine 34, video decoder 35, and display control unit 36.

The buffer management unit 440 executes a switching process or the like of front buffer 1, 422-1, and a front buffer 2, 422-2 in the storage unit (graphics plane) 420.

Here, the display image generation unit 430 executes image conversion processes of at least one of the followings.
a. resolution conversion process
b. dynamic range conversion process
c. color space conversion process
In other words, the display image generation unit 430 determines an image conversion manner according to a display function of the display unit 250 that outputs an image and executes the image conversion process of at least one of the above a to c.

The storage unit (graphics plane) 420 has a triple buffering configuration having the three buffers of
a back buffer 421,
a front buffer 1,422-1, and
a front buffer 2,422-2.

The process steps S301 to S306 illustrated in Fig. 12 are executed in order.

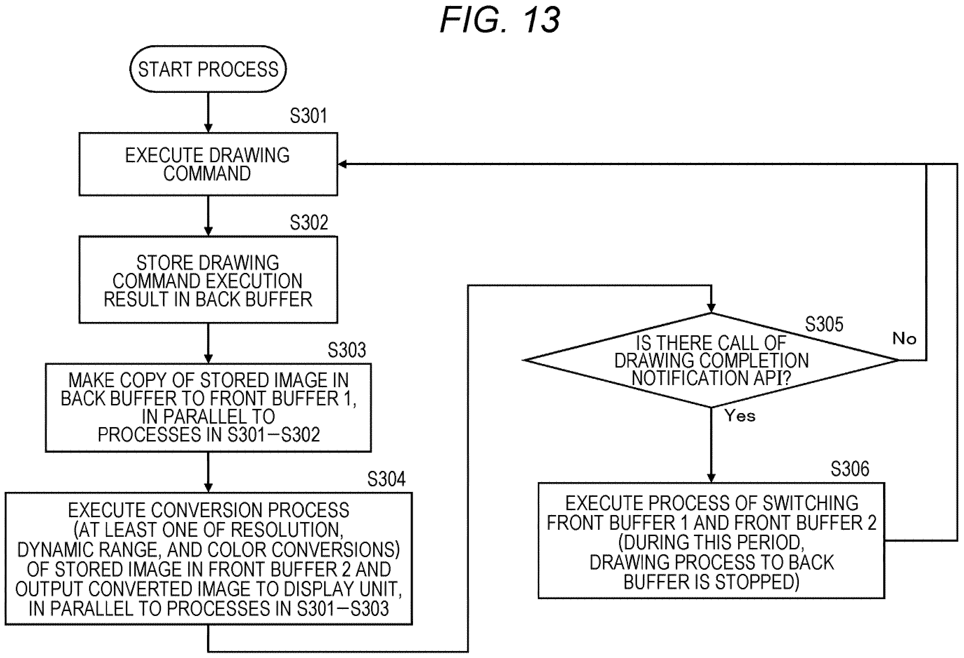

The flowchart of Fig. 13 illustrates a flow of the processes in steps S301 to S306 of Fig. 12.

The data processing unit illustrated in Fig. 12 includes a CPU having a program execution function, reads a program stored in an unillustrated memory, and executes processes according to the flow of Fig. 13.

In the following, details of each process in steps S301 to S306 illustrated in Figs. 12 and 13 will be described in order.

### (Step S301)

In step S301, the BD-J application execution unit 410 of the data processing unit 400 in the information processing device 300 executes a drawing command defined by the BD-J application.

### (Step S302)

Next, in step S302, the BD-J application execution unit 410 stores an image, which is a result of executing a drawing command defined by the BD-J application, in the back buffer 421 in the storage unit 420.

### (Step S303)

Next, the buffer management unit 440 of the data processing unit in the information processing device 300 executes a process to make a copy of the image data stored in the back buffer 421 to the front buffer 1, 422-1 in parallel to an execution of a drawing command executed in steps S301 and S302 and a back buffer storing process of an execution result.

### (Step S304)

Next, in step S304, the display image generation unit 430 of the data processing unit in the information processing device 300 executes a conversion process (at least one of the resolution, dynamic range, and color conversions) of the image stored in the front buffer 2, 422-2 and outputs a converted image to the display unit 450, in parallel to each process in steps S301 to S303.

### (Step S305)

Next, in step S305, the display image generation unit 430 determines whether or not there is a call of a drawing completion API from the BD-J application execution unit 410.

It is determined whether or not there is a call of a drawing completion notification API, that is,
"java.awt.Toolkit#sync() method" from the BD-J application execution unit 410.

In a case where there is not a call of the API, the processes in steps S301 to S304 are repeated.

In a case where there is a call of the API, a process in step S306 will be executed.

### (Step S306)

In a case where it is confirmed that there is a call of the drawing completion notification API, that is, "java.awt.Toolkit#sync() method" from the BD-J application execution unit 410, the buffer management unit 440 of the data processing unit 400 in the information processing device 300 performs a switching process between the front buffer 1, 422-1 and front buffer 2, 422-2 in the storage unit 420 in step S306.

In other words, the front buffer 1, 422-1 is set as a front buffer 2 and the front buffer 2, 422-2 is set as a front buffer 1.

In the following, the processes in steps S301 to S306 are repeated.

Switching of the drawing process target buffer by using a triple buffering configuration described above with reference to Figs. 12 and 13 will be described.

For example, it is assumed that the drawing commands by the BD-J application are set in the following sequence.

```
       drawing command #1
       drawing command #2
 ...
       drawing command #N
       drawing completion notification API
 (java.awt.Toolkit#sync())
       drawing command #N+1
       drawing command #N+2
 ...
       drawing command #N+M
       drawing completion notification API
 (java.awt.Toolkit#sync())
```

The drawing commands #1 to #N are executed for the back buffer 421 and, at the same time, copied data is stored in the front buffer 1, 422-1.

After that,
in a case that the display image generation unit 430 detects an issuance of the drawing completion notification API (java.awt.Toolkit#sync()), the buffer management unit 440 switches the front buffer 1, 422-1 and front buffer 2, 422-2.

At this point, in the front buffer 2 after the buffer switching (the front buffer 1 before switching), a drawing result by the drawing commands #1 to #N are stored.

After that, the BD-J application executes the drawing commands #N+1 to #N+M, and an execution result of the drawing commands #N+1 to #N+M is stored in the back buffer and front buffer 2 after the buffer switching (the front buffer 1 before executing).

In this manner, before or after the issuance of the drawing completion notification API (java.awt.Toolkit#sync()), an execution result of the subsequent drawing commands (drawing commands #N+1 to #N+M) by the BD-J application can be stored in one front buffer in which the drawing result (the execution result of drawing commands #1 to #N) before an issuance of the API so that a continuous command execution result storing process can be performed without a pause.

Further, by the subsequent issuance of the drawing completion notification API (java.awt.Toolkit#sync()), the buffer that stores an execution result of the drawing commands (drawing commands #N+1 to #N+M) is switched as a front buffer which is an output target, and an image conversion process and an image output process are executed on the stored image in the output target front buffer.

In this manner, according to the present embodiment, all the drawing commands can be executed by the BD-J application in each image frame.

Further, the image conversion by the display image generation unit 430 are:
a. resolution conversion process,
b. dynamic range conversion process, and
c. color space conversion process.

These processes can be executed on an image frame to which the BD-J application completed a drawing process, and the subsequent image output process also can be output as a converted image which is completed in each image frame.

### [7. Example of hardware configuration of information processing device]

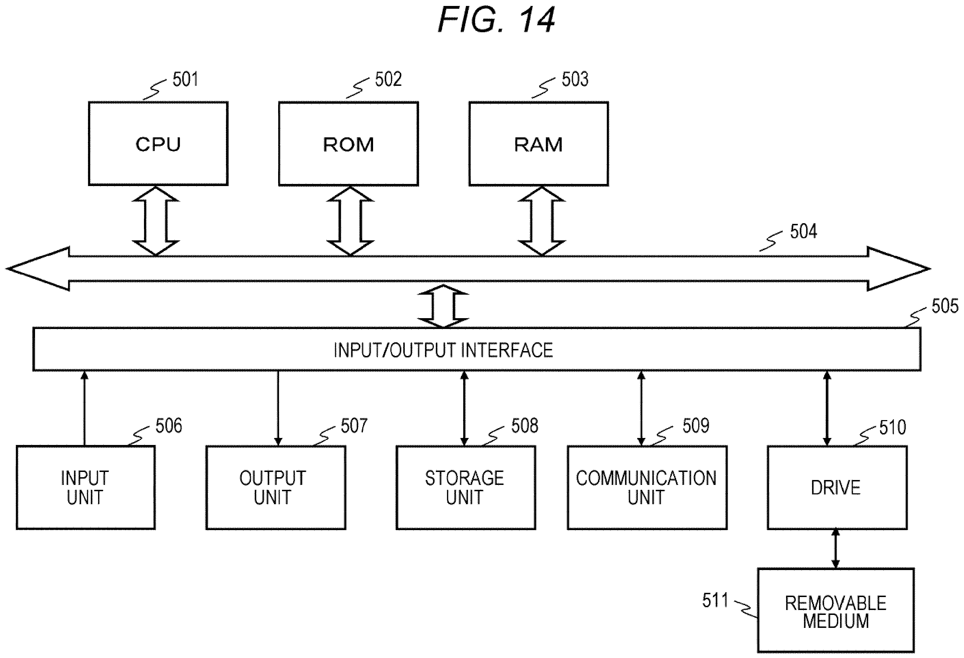

Lastly, with reference to Fig. 14, an example of a hardware configuration of an information processing device that executes the above processes will be described.

A central processing unit (CPU) 501 functions as a data processing unit that executes various processes according to a program stored in a read only memory (ROM) 502 or a storage unit 508. For example, the processes according to the above described flowchart are executed. A random-access memory (RAM) 503 stores a program, data or the like that the CPU 501 executes. The CPU 501, ROM 502, and RAM 503 are connected to one another via a bus 504.

The CPU 501 is connected to an input/output interface 505 via the bus 504 and, to the input/output interface 505, an input unit 506 including various switches, a keyboard, a mouse, a microphone, and the like and an output unit 507 including a display, a speaker, and the like are connected. The CPU 501 executes various processes in response to a command input from the input unit 506 and outputs the process result to the output unit 507 for example.

The storage unit 508 connected to the input/output interface 505 includes a hard disk or the like for example and stores a program or various data executed by the CPU 501. A communication unit 509 communicates with an external device via a network such as the Internet, a local area network, or the like.

A drive 510 connected to the input/output interface 505 drives a removable medium 511 such as a semiconductor memory such as a magnetic disk, an optical disk, a magnetic optical disk, a memory card, or the like and obtains a recorded content, various data such as key information, or the like. For example, by using the obtained content or key data, content decoding, a reproducing process, or the like are executed according to a reproduction program which is executed by the CPU.

### [8. Summary of configuration according to present disclosure]

In the above, with reference to a particular embodiment, the embodiments according to the present disclosure have been described in detail. However, it is obvious that a person skilled in the art can make an amendment or a substitution within a scope of the present disclosure. In other words, the present invention has been disclosed as an example and should not be understood in a limited way. To determine the scope of the present disclosure, the claims should be considered.

Here, the technology disclosed in this specification may have the following configurations.
(1) An information processing device including:
   an application execution unit configured to execute a drawing process and store a drawing result in a storage unit;
   a display image generation unit configured to execute an image conversion process on a drawn image in the storage unit and generate a display image to be output to a display unit; and
   a buffer management unit configured to execute a switching process of a plurality of buffers set in the storage unit,
   in which
   the application execution unit executes a call process of a drawing completion notification application programming interface (API) after a completion of a drawing process based on a drawing command,
   the buffer management unit executes the buffer switching process for switching the buffers storing the image drawn by the application execution unit, in response to a call of the drawing completion notification API, and
   the display image generation unit executes the image conversion process on the image stored in the buffer which is not the buffer in which the drawingprocess by the application execution unit is being executed.
(2) The information processing device according to (1), in which
   the storage unit has a double buffer configuration including a front buffer and a back buffer,
   the application execution unit stores a result of the drawing process based on the drawing command in the back buffer, and
   the buffer management unit executes the switching process between the front buffer and the back buffer in response to the call of the drawing completion notification API.
(3) The information processing device according to (2), in which
   the display image generation unit executes the image conversion process on an image stored in the front buffer.
(4) The information processing device according to (1), in which
   the storage unit has a triple buffer configuration including a back buffer, a first front buffer, and a second front buffer,
   the application execution unit stores a result of the drawing process based on the drawing command in the back buffer,
   the first front buffer has a configuration for storing copy data of the back buffer, and
   the buffer management unit executes the switching process between the first front buffer and the second front buffer in response to a call of the drawing completion notification API.
(5) The information processing device according to (4), in which
   the display image generation unit executes the image conversion process on an image stored in the second front buffer.
(6) The information processing device according to any of (1) to (5), in which
   the display image generation unit executes the image conversion process of at least one of the following a to c:
   a. a resolution conversion process;
   b. a dynamic range conversion process; and
   c. a color space conversion process.
(7) The information processing device according to any of (1) to (6), in which
   the display image generation unit determines a manner of the image conversion according to a display function of the display unit that outputs the image.
(8) An information processing method that is executed in an information processing device,
   the information processing device including:
   an application execution unit configured to execute a drawing process and store a drawing result in a storage unit;
   a display image generation unit configured to execute an image conversion process on a drawn image in the storage unit and generate a display image to be output to a display unit; and
   a buffer management unit configured to execute a switching process of a plurality of buffers set in the storage unit,
   in which
   the application execution unit executes a call process of a drawing completion notification application programming interface (API) after a completion of a drawing process based on a drawing command,
   the buffer management unit executes the buffer switching process for switching the buffers storing the image drawn by the application execution unit, in response to a call of the drawing completion notification API, and
   the display image generation unit executes the image conversion process on the image stored in the buffer which is not the buffer in which the drawing process by the application execution unit is being executed.
(9) A program that causes an information processing device to execute information processing,
   the information processing device including:
   an application execution unit configured to execute a drawing process and store a drawing result in a storage unit;
   a display image generation unit configured to execute an image conversion process on a drawn image in the storage unit and generate a display image to be output to a display unit; and
   a buffer management unit configured to execute a switching process of a plurality of buffers set in the storage unit,
   in which the program causes
   the application execution unit to execute a call process of a drawing completion notification application programming interface (API) after a completion of a drawing process based on a drawing command,
   the buffer management unit to execute the buffer switching process for switching the buffers storing the image drawn by the application execution unit, in response to a call of the drawing completion notification API, and
   the display image generation unit to execute the image conversion process on the image stored in the buffer which is not the buffer in which the drawingprocess by the application execution unit is being executed.

Further, the series of processes described in this specification may be executed by hardware or software, or in combination of those. In a case where the process by software is executed, a program in which a process sequence is recorded may be installed in a memory in a computer mounted in a dedicated hardware to execute, or the programmaybe installed to a general computer that can execute various processes to execute. For example, the program may be recorded in a recording medium in advance. The program may be installed to the computer from a recording medium or may be received via a network such as a local area network (LAN) and the Internet and installed to a recording medium such as a built-in hard disk, or the like.

Here, the various processes described in the specification may be executed in chronological order according to the description or may be executed in parallel or individually according to a process performance of a device that executes the processes or according to need. Further, the system in this specification is a logical collection of a plurality of devices and is not limited to the devices of each component are provided in a same housing.

### INDUSTRIAL APPLICABILITY

In the above, as described above, according to the configuration of the embodiments of the preset disclosure, a configuration in which a completion of a drawing process by a drawing command executed by an application is detected and a conversion process or a display process of an image to which the drawing process is completed can be realized.

More specifically, an application execution unit configured to execute a drawing process and store the drawing result in a storage unit, a display image generation unit configured to execute a conversion process on a drawing image in the storage unit, and a buffer management unit configured to switch a plurality of buf fers in the storage unit are included. The application execution unit executes a call of a drawing completion notification application programming interface (API) after a completion of the drawing process by the drawing command, and the buffer management unit executes a buffer switching process in response to the call of the drawing completion notification API. The display image generation unit executes an image conversion on a stored image in a buffer, which is different from the buffer to which the app executing unit is drawing.

This configuration realizes a configuration in which a completion of a drawing process by a drawing command executed by an application is detected and a conversion process and a display process are performed on the image to which a drawing process is completed.

### REFERENCE SIGNS LIST

- 10: Recording medium
- 20: Information processing device
- 21: PC
- 22: Reproduction device
- 23: TV
- 30: Data processing unit
- 31: BD-J application
- 32: Display image generation unit
- 33: Image conversion process API
- 34: Presentation engine
- 35: Video decoder
- 36: Display control unit
- 100: Information processing device
- 200: Data processing unit
- 210: BD-J application execution unit
- 220: Storage unit (graphics plane)
- 221: Back buffer
- 222: Front buffer
- 230: Display image generation unit
- 240: Buffer management unit
- 250: Display unit
- 300: Information processing device
- 400: Data processing unit
- 410: BD-J application execution unit
- 420: Storage unit (graphics plane)
- 421: Back buffer
- 422: Front buffer
- 430: Display image generation unit
- 440: Buffer management unit
- 450: Display unit
- 501: CPU
- 502: ROM
- 503: RAM
- 504: Bus
- 505: Input/output interface
- 506: Input unit
- 507: Output unit
- 508: Storage unit
- 509: Communication unit
- 510: Drive
- 511: Removable medium

## Claims

1. An information processing device comprising:
an application execution unit configured to execute a drawing process and store a drawing result in a storage unit;
a display image generation unit configured to execute an image conversion process on a drawn image in the storage unit and generate a display image to be output to a display unit; and
a buffer management unit configured to execute a switching process of a plurality of buffers set in the storage unit,
wherein
the application execution unit executes a call process of a drawing completion notification application programming interface (API) after a completion of a drawing process based on a drawing command,
the buffer management unit executes the buffer switching process for switching the buffers storing the image drawn by the application execution unit, in response to a call of the drawing completion notification API, and
the display image generation unit executes the image conversion process on the image stored in the buffer which is not the buffer in which the drawingprocess by the application execution unit is being executed.

2. The information processing device according to claim 1,
wherein
the storage unit has a double buffer configuration including a front buffer and a back buffer,
the application execution unit stores a result of the drawing process based on the drawing command in the back buffer, and
the buffer management unit executes the switching process between the front buffer and the back buffer in response to the call of the drawing completion notification API.

3. The information processing device according to claim 2, wherein
the display image generation unit executes the image conversion process on an image stored in the front buffer.

4. The information processing device according to claim 1,
wherein
the storage unit has a triple buffer configuration including a back buffer, a first front buffer, and a second front buffer,
the application execution unit stores a result of the drawing process based on the drawing command in the back buffer,
the first front buffer has a configuration for storing copy data of the back buffer, and
the buffer management unit executes the switching process between the first front buffer and the second front buffer in response to a call of the drawing completion notification API.

5. The information processing device according to claim 4, wherein
the display image generation unit executes the image conversion process on an image stored in the second front buffer.

6. The information processing device according to claim 1, wherein
the display image generation unit executes the image conversion process of at least one of the following a to c:
a. a resolution conversion process;
b. a dynamic range conversion process; and
c. a color space conversion process.

7. The information processing device according to claim 1, wherein
the display image generation unit determines a manner of the image conversion according to a display function of the display unit that outputs the image.

8. An information processing method that is executed in an information processing device,
the information processing device comprising:
an application execution unit configured to execute a drawing process and store a drawing result in a storage unit;
a display image generation unit configured to execute an image conversion process on a drawn image in the storage unit and generate a display image to be output to a display unit; and
a buffer management unit configured to execute a switching process of a plurality of buffers set in the storage unit,
wherein
the application execution unit executes a call process of a drawing completion notification application programming interface (API) after a completion of a drawing process based on a drawing command,
the buffer management unit executes the buffer switching process for switching the buffers storing the image drawn by the application execution unit, in response to a call of the drawing completion notification API, and
the display image generation unit executes the image conversion process on the image stored in the buffer which is not the buffer in which the drawingprocess by the application execution unit is being executed.

9. A program that causes an information processing device to execute information processing,
the information processing device comprising:
an application execution unit configured to execute a drawing process and store a drawing result in a storage unit;
a display image generation unit configured to execute an image conversion process on a drawn image in the storage unit and generate a display image to be output to a display unit; and
a buffer management unit configured to execute a switching process of a plurality of buffers set in the storage unit,
wherein the program causes
the application execution unit to execute a call process of a drawing completion notification application programming interface (API) after a completion of a drawing process based on a drawing command,
the buffer management unit to execute the buffer switching process for switching the buffers storing the image drawn by the application execution unit, in response to a call of the drawing completion notification API, and
the display image generation unit to execute the image conversion process on the image stored in the buffer which is not the buffer in which the drawingprocess by the application execution unit is being executed.
